# EUROPEAN PATENT SPECIFICATION

(11) **EP 1 163 997 B1**
(45) Date of publication and mention of the grant of the patent: **25.08.2004**
(21) Application number: 00112591.3
(22) Date of filing: 14.06.2000
(51) Int. Cl.: B29C 59/00, B65H 23/188

(54) **Method and unit for heating tear-off zones of a strip of packaging material for producing sealed packages of pourable food products**
Verfahren und Vorrichtung zum Aufheizen eines Aufreissstreifens von Verpackungsfolienmaterial zur Herstellung von versiegelten Verpackungen fliessfähiger Nahrungsmittel
Methode et dispositif pour chauffer la zone de dechirage d'une bande de materiau d'emballage pour la production d'emballages scelles de produits alimentaires liquides

(43) Date of publication of application: 19.12.2001
(73) Proprietor: Tetra Laval Holdings & Finance SA, 1009 Pully (CH)
(72) Inventor: Larsson, Bernt, 237 31 Bjärred (SE); Jönsson, Roger, 270 33 Vollsjö (SE)
(74) Representative: Franzolin, Luigi

(56) References cited:
- WO-A-98/14317
- GB-A- 2 088 340
- US-A- 3 909 582
- US-A- 4 265 616
- US-A- 5 000 321
- US-A- 5 470 300

## Description

The present invention relates to a method and unit for heating tear-off zones of a strip of packaging material for producing sealed packages of pourable food products.

As is known, many pourable food products, such as fruit juice, UHT (ultra-high-temperature processed) milk, wine, tomato sauce, etc., are sold in packages made of sterilized packaging material.

A typical example of such a package is the parallelepiped-shaped package for liquid or pourable food products known as Tetra Brik Aseptic (registered trademark), which is formed by folding and sealing laminated strip packaging material. The packaging material has a multilayer structure comprising a layer of fibrous material, e.g. paper, covered on both sides with layers of heat-seal plastic material, e.g. polyethylene, and, in the case of aseptic packages for long-storage products, such as UHT milk, also comprises a layer of oxygen-barrier material defined, for example, by an aluminium film, which is superimposed on a layer of heat-seal plastic material and is in turn covered with another layer of heat-seal plastic material eventually defining the inner face of the package contacting the food product.

As is known, such packages are made on fully automatic packaging machines, on which a continuous tube is formed from the packaging material supplied in strip form; the strip of packaging material is sterilized on the packaging machine itself, e.g. by applying a chemical sterilizing agent, such as a hydrogen peroxide solution, which, after sterilization, is removed, e.g. vaporized by heating, from the surfaces of the packaging material; and the strip of packaging material so sterilized is maintained in a closed sterile environment, and is folded and sealed longitudinally to form a vertical tube.

The tube is filled with the sterilized or sterile-processed food product, and is sealed and cut at equally spaced cross sections to form pillow packs, which are then folded mechanically to form the finished, e.g. substantially parallelepiped-shaped, packages.

Alternatively, the packaging material may be cut into blanks, which are formed into packages on forming spindles, and the resulting packages are filled with the food product and sealed. One example of such a package is the so-called "gable-top" package commonly known by the trade name Tetra Rex (registered trademark).

To open such packages, various solutions have been proposed, one of which consists in forming, at a corner portion of a flap on the package, a tear-off zone normally defined by a preferential tear line defined by a succession of perforations extending through the outer layers of the packaging material down to the layer of barrier material; and the package is opened by lifting the flap and tearing or cutting off the corner portion along the perforations.

Packages of this type, however, cannot, obviously, be closed once opened, and must therefore be handled with care to prevent spillage of the remaining food product inside the package.

By way of a solution to the problem, packages of the type described above have been provided with closable opening devices, which substantially comprise a frame defining an opening and fitted over a tear-off zone, e.g. a pierceable or pull-off portion, in a wall of the package; and a cap hinged to the frame. The cap is normally molded integrally with the frame, and is initially sealed to the frame, along a peripheral edge surrounding the opening, by a thin breakable annular connecting portion. Once unsealed, the cap is movable between a closed position cooperating in fluidtight manner with the frame, and an open position. Alternatively, threaded caps are also used, which are separate from and initially screwed to the frame.

The tear-off zones for receiving the opening devices of the packages may be formed, for example, by forming a series of through holes in the fibrous layer of the strip packaging material before the fibrous layer is laminated with the thermoplastic and barrier layers, which, at the end of the laminating process, therefore cover the holes.

The tear-off zone can be detached from the rest of the package material in various ways, e.g. by means of a cutting member activated by unscrewing the cap, or, if the cap is fixed directly to a respective tear-off zone of the package, by simply detaching the cap from the frame.

Whichever the case, to enable the packages to be opened easily, the tear-off zones are heated locally before the strip packaging material is folded longitudinally into a vertical tube.

The heating operation is performed using a heating element, e.g. an inductor, located along the path of the strip packaging material and interacting with the strip at the tear-off zones.

The heating operation provides for local decrystallization or melting of the polymers forming the zone of packaging material affected, and which subsequently resolidify in amorphous form, so that the locally heated zone of the packaging material remains as aseptic and as compatible with the food products as before, while at the same time being more fragile and, therefore, easier to tear.

The heating operation is performed by arresting the strip of packaging material, as each tear-off zone moves past the heating element, long enough for the polymers forming the tear-off zone to decrystallize, so that the feed rate of the strip depends on the decrystallization time, thus impairing the output rate of the packaging machine.

Moreover, specially designed heating elements must be used, depending on the shape and/or size of the tear-off zone for heating, thus reducing the versatility of the heating elements.

US 3,909,582 discloses a method of forming a line of weakness in at least one but not all layers of a multilayer laminate, as defined in the preamble of claim 1.

WO 98/14317 discloses a method of and an apparatus for treating a laminate, wherein, by way of a groove provided through a covering of the laminate, a limited zone of a polymer layer substantially aligned with the groove is heated to become more readily breakable.

US 5,470,300 refers to a system and method in the manufacture of plastic bags for accurately registering a web having graphic material printed repetitively thereon with respect to a transverse cutting and sealing device.

US 4,265,616 refers to a process for forming a continuous longitudinal heat-weakened strip in a cross-lapped oriented polyolefin film.

US 5,000,321 discloses different opening aids for a package made of multilayer compound foil material, including a notch or groove formed by a laser beam in order to define a more readily breakable zone.

It is an object of the present invention to provide a method of heating tear-off zones of a strip of packaging material for producing sealed packages of pourable food products, designed to eliminate the aforementioned drawbacks.

According to the present invention, there is provided a method of heating tear-off zones of a strip of packaging material for producing sealed packages of pourable food products, as claimed in claim 1.

The present invention also relates to a unit for heating tear-off zones of a strip of packaging material for producing sealed packages of pourable food products, as claimed in claim 6.

A preferred, non-limiting embodiment of the present invention will be described by way of example with reference to the accompanying drawings, in which:
Figure 1 shows, schematically, a unit in accordance with the present invention, for heating tear-off zones of a strip of packaging material for producing sealed packages of pourable food products;
Figure 2 shows a top plan view of a portion of the strip of packaging material featuring one of said tear-off zones;
Figure 3 shows a larger-scale cross section, indicating the component layers, of the Figure 2 strip portion;
Figure 4 shows a larger-scale view in perspective of an induction heating element of the Figure 1 unit.

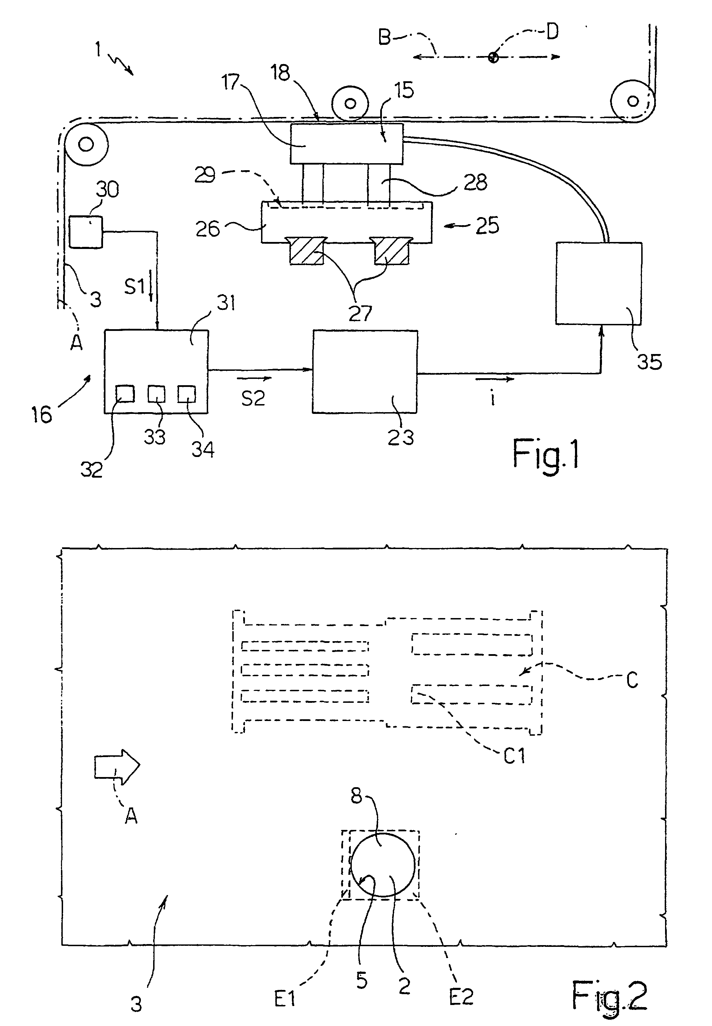

Number 1 in Figure 1 indicates as a whole a unit in accordance with the present invention for heating tear-off zones 2 of a strip 3 of packaging material for producing known aseptic sealed packages (not shown) of pourable food products, such as pasteurized or UHT milk, fruit juice, wine, etc.

Strip 3 is fed along a path A and has, on one face, a number of optical reference codes C (the borders between different coloured areas of which are indicated schematically by dash lines in Figure 2) defined, in the example shown, by respective bar codes equally spaced along strip 3, in the direction of path A, with the same spacing as that of tear-off zones 2. More specifically, each reference code C has a predetermined relationship with the respective tear-off zone 2. That is, a line C1 of each reference code C identifies, with reference to path A, the downstream end of the respective tear-off zone 2.

Unit 1 may be incorporated in a packaging machine (not shown) for continuously producing the aforementioned packages from strip 3 of packaging material. More specifically, strip 3 is folded and sealed longitudinally in known manner to form a vertical tube, which is filled with the sterilized or sterile-processed food product for packaging, is sealed along equally spaced cross sections, and is subjected to successive mechanical folding operations to form the finished packages.

Unit 1 is located along path A of strip 3, upstream from a station for forming said vertical tube.

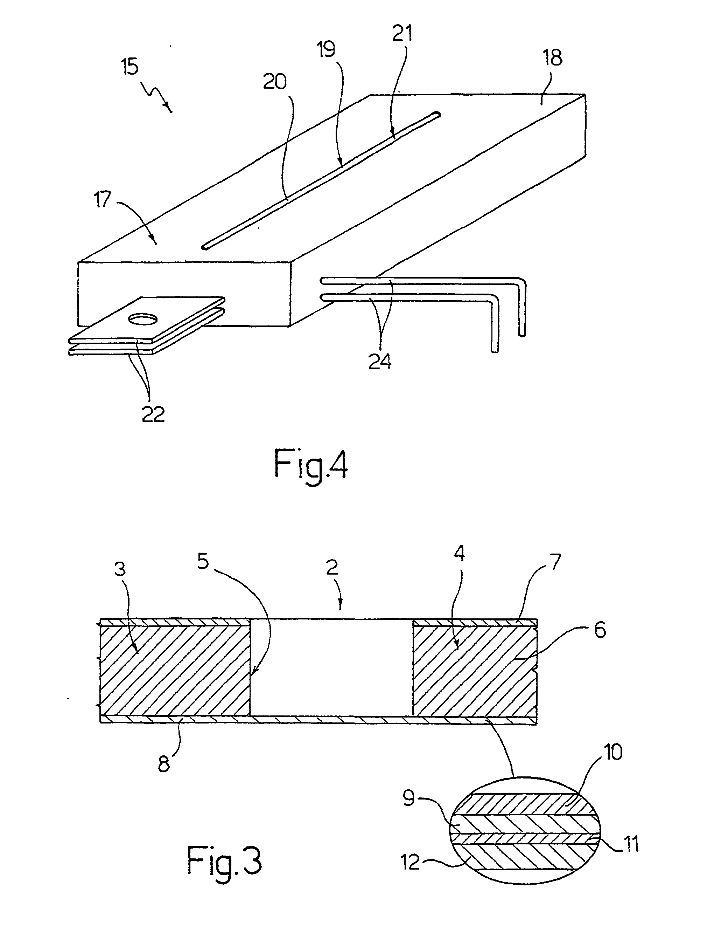

With particular reference to Figures 2 and 3, strip 3 has a multilayer structure, and comprises a main sheet 4 having a number of through openings 5 - circular in the example shown - and defined by a layer of fibrous material 6, e.g. paper, covered, on the side eventually forming the outer face of the package, with a film 7 of heat-seal plastic material - in the example shown, polyethylene.

Main sheet 4 is also covered, on the side eventually forming the inner face of the package, with a laminated sheet 8 covering openings 5 and defining, at openings 5, said tear-off zones 2.

Laminated sheet 8 comprises a layer 9 of electrically conductive barrier material defined, for example, by an aluminium film, and which is covered on both sides with respective layers 10, 11 of heat-seal plastic material, e.g. polyethylene. In the example shown, layer 11 is covered, on the opposite side to that contacting layer 9 of barrier material, with a further layer 12 of heat-seal plastic material, normally polyethylene.

Zones 2 may be covered externally with closable opening devices (not shown) substantially comprising a frame applied to the packaging material about a respective opening 5 in main sheet 4, and a cap hinged or screwed to the frame, and which permits withdrawal of the food product from the package and safeguards the food product from contact with external agents once the package has been opened by tearing respective zone 2.

Tear-off zones 2 may also be defined by tear-off zones of strip 3 defining, for example, corner portions of respective opening flaps of the finished packages.

An important aspect of the present invention (Figure 1) lies in unit 1 comprising an induction heating element 15 located along path A and activated selectively to locally heat zones 2 of strip 3 by inducing electrical current in barrier material layer 9 of zones 2; and an activating device 16 for activating the heating element as strip 3 advances and for successive time intervals, each of a duration T selected as a function of the traveling speed of strip 3, so as to enable complete heating of tear-off zones 2, regardless of the size of the tear-off zones in the direction of path A.

With reference to Figures 1 and 4, heating element 15 substantially comprises a substantially parallelepiped-shaped body 17 made of electrically insulating material, small in height as compared with the other dimensions, and positioned with a base face 18 parallel to strip 3; and an inductor 19 carried by body 17 and defined, in the example shown, by a conductive copper plate having a rectangular-strip-shaped operating portion 20 housed in a complementary groove 21 formed in face 18 of body 17.

Assuming strip 3 were stationary, inductor 19 is designed to heat an area E1 of strip 3 having the same profile as operating portion 20.

Inductor 19 also comprises two terminals 22 projecting outwards from body 17 and connected to a highfrequency electrical current source 23 of activating device 16.

To prevent heating element 15 from overheating, body 17 is fitted through with two cooling conduits 24 supplied with cooling fluid.

As shown in Figure 1, unit 1 also comprises a guide-slide assembly 25 for adjusting the position of heating element 15 with respect to strip 3 in two directions B, D perpendicular to each other and parallel to the portion of strip 3 travelling past heating element 15. More specifically, direction B is parallel to the traveling direction of strip 3 close to heating element 15.

Assembly 25 comprises a first supporting member 26 mounted to slide in direction D along two fixed guides 27; and a second supporting member 28 connected integrally to body 17 of heating element 15 and mounted to slide in direction B along a guide 29 formed on supporting member 26 on the opposite side to guide 27.

With reference to Figure 1, activating device 16 comprises a position sensor 30, e.g. a photocell, located upstream from heating element 15 along path A, positioned facing strip 3, and generating a pulse presence signal S1 indicating the passage of a reference code C of strip 3 past sensor 30; and a control device 31, which receives presence signal S1 and supplies source 23 with a pulse control signal S2, the length of the pulses of which is related to the desired duration T of the time intervals in which heating element 15 is activated.

More specifically, presence signal S1 assumes a high logic level during the time period in which a reference code C of strip 3 travels past sensor 30, and a low logic level in any other condition.

On receiving a presence signal S1 pulse, control device 31 generates in control signal S2 a corresponding pulse with a delay R related to the speed of strip 3 and to the distance, along path A, between sensor 30 and heating element 15, so that, for each activation of heating element 15, strip 3 is heated locally at the tear-off zone 2 associated with the detected reference code C.

The amplitude (and therefore power), length and delay of the control signal S2 pulses are adjustable manually by means of respective adjusting elements 32, 33, 34 shown schematically in Figure 1.

Source 23 receives control signal S2 and generates a current i, which is supplied to inductor 19 of heating element 15 via a known impedance-matching transformer 35. The length of time current i is supplied to inductor 19, and therefore the desired duration T of the time intervals in which heating element 15 is activated, is related to the length of the control signal S2 pulses, whereas the amplitude, and therefore the power, of current i is related to the amplitude of the control signal S2 pulses. More specifically, the amplitude of current i is such as to induce a current in barrier material layer 9 of the portion of strip 3 facing the operating portion 20 of inductor 19 when control signal S2 assumes a high logic level, and is zero when control signal S2 assumes a low logic level.

In actual use, as strip 3 travels along path A, the passage of a reference code C past sensor 30 switches presence signal S1 from a low to a high logic level. In response, control device 31 generates a corresponding pulse in control signal S2, which, in turn, supplies current i to inductor 19 of heating element 15. The pulse in control signal S2 is generated by control device 31 with such a delay R with respect to the switch in presence signal S1 that inductor 19 is supplied as the zone 2 of strip 3 associated with the reference code C detected by sensor 30 travels past heating element 15.

Upon inductor 19 being supplied with current i, an electrical current is induced in barrier material layer 9 of the zone 2 of strip 3 facing inductor 19, so that laminated sheet 8 covering a corresponding opening 5 in main sheet 4 is heated locally. More specifically, on account of the geometry of operating portion 20 and thanks to the travelling of strip 3, inductor 19 heats a rectangular area E2 of strip 3 containing a respective tear-off zone 2 and greater than area E1, which inductor 19 would heat in the case of strip 3 was arrested. The size of area E2 in a direction perpendicular to the travelling direction of strip 3, i.e. in direction D, is determined by the longitudinal extension of strip-shaped operating portion 20 of inductor 19, and, in the example shown, is greater than the diameter of openings 5 in main sheet 4 of strip 3; whereas, on the basis of what was stated above, the size of area E2 in the travelling direction of strip 3 depends on the speed of strip 3 and on the duration T of the time intervals in which heating element 15 is activated, i.e. on the set pulse length of control signal S2 generated by control device 31.

The heating operation produces local decrystallization or melting of the polymers forming the affected area E2 of strip 3, and which subsequently resolidify in amorphous form, so that the locally heated zone of the packaging material remains as aseptic and as compatible with the food products as before, while at the same time being more fragile and, therefore, easier to tear.

The advantages of unit 1 and the method according to the present invention will be clear from the foregoing description.

In particular, by performing the heating operation as strip 3 advances, and by varying the length of the control signal S2 pulses, i.e. the duration T of the time intervals in which heating element 15 is activated, it is possible, using an inductor (19) of a predetermined configuration, to heat tear-off zones 2 of strip 3 of different sizes in the travelling direction of strip 3, thus greatly increasing the versatility of the inductors. Moreover, performing the heating operation as strip 3 advances, strip 3 may be fed continuously or in steps, at a rate independent of the time taken to perform the heating operation.

Clearly, changes may be made to unit 1 and to the method as described and illustrated herein without, however, departing from the scope of the accompanying Claims.

In particular, each reference code C may be associated with two or more tear-off zones 2 of strip 3 aligned in a direction perpendicular to the travelling direction of strip 3.

## Claims

1. A method of heating tear-off zones (2) of a strip (3) of packaging material for producing sealed packages of pourable food products and fed along a given path (A); said tear-off zones (2) of said strip (3) eventually being at least partly detached from adjacent portions of the packaging material to define respective pour openings of said packages; said method comprising the step of successively heating said tear-off zones (2) by means of a heating element (15) located along said path (A); said heating step being performed as said strip (3) is advanced, and comprising the step of activating said heating element (15) for successive time intervals, each of a duration (T) selectable as a function of the travelling speed of the strip (3), so as to enable said tear-off zones (2) to be heated completely regardless of the size of the tear-off zones in the direction of said path (A); the method being **characterized by** comprising the step of identifying the tear-off zone (2) for heating at a detecting station (30) located upstream from said heating element (15) along said path (A); said step of activating said heating element (15) being performed after said identifying step and with a predetermined delay (R) related to the travelling speed of said strip (3) and to the distance, along said path (A), between said detecting station (30) and said heating element (15), so that, for each activation of the heating element (15), said strip (3) is heated locally at the identified said tear-off zone (2).

2. A method as claimed in Claim 1, **characterized in that** said strip (3) comprises a number of reference codes (C), each associated with at least one respective said tear-off zone (2); and **in that** said identifying step comprises the step of detecting the passage of a said reference code (C) of said strip (3) past said detecting station (30).

3. A method as claimed in Claim 2, **characterized by** comprising the step of adjusting the length of said delay (R) between said step of detecting said reference codes (C) and said step of activating said heating element (15) as a function of the travelling speed of said strip (3) and of the distance, along said path (A), between said detecting station (30) and said heating element (15).

4. A method as claimed in any one of the foregoing Claims, **characterized by** comprising the step of regulating the duration (T) of said time intervals in which said heating element (15) is activated as a function of the travelling speed of said strip (3) and of the geometry of said tear-off zones (2) for heating.

5. A method as claimed in any one of the foregoing Claims, **characterized in that** said tear-off zones (2) of said strip (3) comprise at least one layer (9) of electrically conductive material; and **in that** said step of activating said heating element (15) is performed by inducing an electrical current in said layer (9) of electrically conductive material of said tear-off zone (2) located at the heating element (15).

6. A unit (1) for heating tear-off zones (2) of a strip (3) of packaging material for producing sealed packages of pourable food products and fed along a given path (A); said tear-off zones (2) of said strip (3) eventually being at least partly detached from adjacent portions of the packaging material to define respective pour openings of said packages; said unit (1) comprising at least one heating element (15) located along said path (A) and activated selectively to successively heat said tear-off zones (2), and activating means (16) for activating said heating element (15) as said strip (3) is advanced, and for successive time intervals, each of a duration (T) selectable as a function of the travelling speed of the strip (3), so as to enable said tear-off zones (2) to be heated completely regardless of the size of the tear-off zones (2) in the direction of said path (A); **characterized by** comprising identifying means (30) located upstream from said heating element (15) along said path (A) to successively identify said tear-off zones (2) for heating; said activating means (16) comprising drive means (23, 31) for activating said heating element (15), following identification of said tear-off zones (2) for heating, with a predetermined delay (R) related to the travelling speed of said strip (3) and to the distance, along said path (A), between said identifying means (30) and said heating element (15).

7. A unit as claimed in Claim 6, **characterized in that** said strip (3) comprises a number of reference codes (C), each associated with at least one respective said tear-off zone (2); and **in that** said identifying means comprise sensor means (30) generating a presence signal (S1) indicating the passage of a said reference code (C) of said strip (3) past the sensor means (30).

8. A unit as claimed in Claim 7, **characterized in that** said drive means (23, 31) comprise control means (31) receiving said presence signal (S1) and generating a control signal (S2) to activate said heating element (15).

9. A unit as claimed in Claim 8, **characterized in that** said presence signal and said control signal (S1, S2) are pulse signals; and **in that** the pulses of said control signal (S2) are generated with said delay (R) with respect to the corresponding pulses of said presence signal (S1).

10. A unit as claimed in Claim 9, **characterized in that** the pulses of said control signal (S2) are of a length related to the desired duration (T) of said time intervals in which said heating element is activated.

11. A unit as claimed in any one of Claims 6 to 10, **characterized in that** said tear-off zones (2) of said strip (3) comprise at least one layer (9) of electrically conductive material; and **in that** said heating element (15) comprises an inductor (19) facing said strip (3) to induce a current in said layer (9) of electrically conductive material of said tear-off zone (2) located at the heating element (15).

12. A unit as claimed in Claim 11, **characterized in that** said drive means (23, 31) comprise a current source (23) receiving said control signal (S2) and supplying said inductor (19) with a current related to the control signal (S2).

13. A unit as claimed in any one of Claims 9 to 12, **characterized in that** said control means (31) comprise first adjusting means (33) for adjusting the length of said pulses of said control signal (S2) as a function of the travelling speed of said strip (3) and of the geometry of said tear-off zones (2) for heating.

14. A unit as claimed in any one of Claims 9 to 13, **characterized in that** said control means (31) comprise second adjusting means (34) for adjusting the length of said delay (R) between corresponding pulses of said presence signal and said control signal (S1, S2) as a function of the travelling speed of said strip (3) and of the distance, along said path (A), between said sensor means (30) and said heating element (15).

## Patentansprüche

1. Verfahren zum Aufheizen von Aufreiß-Zonen (2) einer Verpackungsmaterialbahn (3) zur Herstellung von versiegelten Packungen fließfähiger Nahrungsmittel, die entlang eines vorbestimmten Weges vorgeschoben wird; wobei die Aufreiß-Zonen (2) der Bahn(3) wenigstens teilweise von den benachbarten Abschnitten des Verpackungsmaterials abgelöst werden, um entsprechende Ausgussöffnungen der Packungen zu definieren; wobei das Verfahren den Schritt des aufeinanderfolgenden Aufheizens der Aufreiß-Zonen (2) durch ein Heizelement (15), das sich entlang Weg (A) befindet, aufweist; wobei der Aufheizschritt durchgeführt wird, wenn die Bahn (3) vorgeschoben wird und den Schritt des Aktivierens des Heizelements (15) für aufeinanderfolgende Zeitintervalle aufweist, von denen jedes eine Zeitdauer (T) hat, die als Funktion der Vorschubgeschwindigkeit der Bahn (3) auswählbar ist, um zu ermöglichen, dass die Aufreiß-Zonen (2) vollstandig aufgeheizt werden, unabhängig von der Größe der Aufreiß-Zonen in der Richtung von Weg (A); wobei das Verfahren **gekennzeichnet ist durch** das Aufweisen eines Identifizierungsschritts der aufzuheizenden Aufreiß-Zone (2) an einer Ermittlungsstation (30), die sich entlang Weg (A) vor dem Heizelement befindet; wobei der Aktivierungsschritt des Heizelements (15) nach dem Identifizierungsschritt mit einer vorbestimmten Verzögerung (R) ausgeführt wird, die von der Vorschubgeschwindigkeit der Bahn (3) und dem Abstand, entlang Weg (A), zwischen der Ermittlungsstation (30) und dem Heizelement (15) abhängt, so dass bei jeder Aktivierung des Heizelements (15) die Bahn (3) lokal in der identifizierten Aufreiß-Zone (2) erhitzt wird.

2. Verfahren nach Anspruch 1, **dadurch gekennzeichnet, dass** die Bahn (3) eine Anzahl von Referenz-Codes (C) aufweist, die jeweils mit wenigstens einer der Aufreiß-Zonen (2) assoziiert sind; und dadurch, dass der Identifizierungsschritt den Schritt der Ermittlung des Passierens des Referenz-Codes (C) der Bahn (3) entlang der Ermittlungsstation (30) aufweist.

3. Verfahren nach Anspruch 2, **gekennzeichnet durch** das Aufweisen des Schritts des Anpassens der Länge der Verzögerung (R) zwischen dem Schritt der Ermittlung des Referenz-Codes (C) und dem Aktivierungsschritt des Heizelements (15) als eine Funktion der Vorschubgeschwindigkeit der Bahn (3) und des Abstands, entlang Weg (A), zwischen der Ermittlungsstation (30) und dem Heizelement (15).

4. Verfahren nach einem der voranstehenden Ansprüche, **gekennzeichnet durch** das Aufweisen des Schritts der Regulierung der Dauer (T) des Zeitintervalls, während dessen das Heizelement (15) aktiviert wird, als eine Funktion der Vorschubgeschwindigkeit der Bahn (3) und der Geometrie der aufzuheizenden Aufreiß-Zonen (2).

5. Verfahren nach einem der voranstehenden Ansprüche, **dadurch gekennzeichnet, dass** die Aufreiß-Zonen (2) der Bahn (3) wenigstens eine Schicht (9) aus einem elektrisch leitenden Material aufweisen; und dadurch, dass der Aktivierungsschritt des Heizelements (15) ausgeführt wird durch Induzieren eines elektrischen Stroms in die Schicht (9) der Aufreiß-Zone (2) aus elektrisch leitendem Material, die sich am Heizelement (15) befindet.

6. Einheit (1) zum Aufheizen von Aufreiß-Zonen (2) einer Verpackungsmaterialbahn (3) zur Herstellung von versiegelten Packungen fließfähiger Nahrungsmittel, die entlang eines vorbestimmten Weges vorgeschoben wird; wobei die Aufreiß-Zone (2) der Bahn (3) wenigstens teilweise von den benachbarten Abschnitten des Verpackungsmaterials abgelöst wird, um entsprechende Ausgussöffnungen der Packungen zu definieren; wobei die Einheit (1) wenigstens ein Heizelement (15) aufweist, das sich entlang Weg (A) befindet und selektiv aktiviert wird, um die Aufreiß-Zonen (2) nacheinander zu erhitzen; und Aktivierungsmittel (16) zum Aktivieren des Heizelements (15), wenn die Bahn (3) vorgeschoben wird, für aufeinanderfolgende Zeitintervalle, deren Dauer (T) jeweils als Funktion der Vorschubgeschwindigkeit der Bahn (3) auswählbar ist, um ein vollständiges Aufheizen der Aufreiß-Zone (2) zu ermöglichen, unabhängig von der Größe der Aufreiß-Zonen in Richtung von Weg (A); **gekennzeichnet durch** das Aufweisen von Identifizierungsmitteln (30), die sich entlang Weg (A) vor dem Heizelement (15) befinden, um nacheinander die aufzuheizenden Aufreiß-Zonen (2) zu identifizieren; wobei die Aktivierungsmittel (16) Antriebsmittel (23, 31) zum Aktivieren des Heizelements (15) aufweisen, die der Identifikation der aufzuheizenden Aufreiß-Zonen (2) mit einer vorbestimmten Verzögerung (R) folgt, die von der Vorschubgeschwindigkeit der Bahn (3) und dem Abstand, entlang Weg (A), zwischen den Indentifizierungsmitteln (30) und dem Heizelement (15) abhängt.

7. Einheit nach Anspruch 6, **dadurch gekennzeichnet, dass** die Bahn (3) eine Anzahl von Referenz-Codes (C) aufweist, die jeweils mit wenigstens einer der Aufreiß-Zonen (2) assoziiert sind; und dadurch, dass die Identifizierungsmittel Sensormittel (30) aufweisen, die ein Präsenzsignal (S1) generieren, das das Passieren des Referenz-Codes (C) der Bahn (3) entlang der Sensormittel (30) anzeigt.

8. Einheit nach Anspruch 7, **dadurch gekennzeichnet, dass** die Antriebsmittel (23, 31) Steuermittel (31) aufweisen, die das Präsenzsignal (S1) erhalten und ein Steuersignal (S2) generieren, um das Heizelement (15) zu aktivieren.

9. Einheit nach Anspruch 8, **dadurch gekennzeichnet, dass** das Präsenzsignal und das Steuersignal (S1, S2) Impulssignale sind; und dadurch, dass die Impulse des Steuersignals (S2) mit der Verzögerung (R) generiert werden, abhängig von den entsprechenden Impulsen des Präsenzsignals (S1).

10. Einheit nach Anspruch 9, **dadurch gekennzeichnet, dass** die Impulse des Steuersignals (S2) eine Länge haben, die sich auf die gewünschte Zeitdauer (T) der Zeitintervalle bezieht, in denen das Heizelement (15) aktiviert ist.

11. Einheit nach einem der Ansprüche 6 bis 10, **dadurch gekennzeichnet, dass** die Aufreiß-Zonen (2) der Bahn (3) wenigstens eine Schicht (9) aus einem elektrisch leitenden Material aufweisen; und dadurch, dass das Heizelement (15) einen Induktor (19) aufweist aufweist, der der Bahn (3) zugewandt ist, um elektrischen Strom in die Schicht (9) aus elektrisch leitenden Materials der Aufreiß-Zone (2), die sich am Heizelement (15) befindet, zu induzieren.

12. Einheit nach Anspruch 11, **dadurch gekennzeichnet, dass** die Antriebsmittel (23, 31) eine Stromquelle (23) aufweisen, die das Steuersignal (S2) erhält und den Induktor (19) mit einem Strom in Abhängigkeit von Steuersignal (S2) versorgt.

13. Einheit nach einem der Ansprüche 9 bis 12, **dadurch gekennzeichnet, dass** die Steuermittel (31) erste Anpassmittel (33) haben, zum Anpassen der Länge des Impulses des Steuersignals (S2) als Funktion der Vorschubgeschwindigkeit der Bahn (3) und der Geometrie der aufzuheizenden Aufreiß-Zonen (2).

14. Einheit nach einem der Ansprüche 9 bis 13, **dadurch gekennzeichnet, dass** die Steuermittel (31) zweite Anpassmittel (34) haben, zum Anpassen der Länge der Verzögerung (R) zwischen den entsprechenden Impulsen des Präsenzsignals und des Steuersignals (S1, S2) als Funktion der Vorschubgeschwindigkeit der Bahn (3) und des Abstands, entlang Weg (A), zwischen den Sensormitteln (30) und dem Heizelement (15).

## Revendications

1. Procédé de chauffage des zones de déchirage (2) d'une bande (3) de matériau d'emballage pour produire des emballages scellés de produits alimentaires fluides, avancée le long d'un chemin donné (A) ; les dites zones de déchirage (2) de la dite bande (3) étant finalement au moins en partie détachées des parties adjacentes du matériau d'emballage de manière à définir des orifices de versage respectifs des dits emballages ; le dit procédé comprenant l'étape de chauffage successif des dites zones de déchirage (2) au moyen d'un élément chauffant (15) placé le long du dit chemin (A) ; la dite étape de chauffage étant effectuée pendant que la dite bande (3) avance, et comprenant l'étape d'activation du dit élément chauffant (15) pendant des intervalles de temps successifs, ayant chacun une durée (T) déterminable en fonction de la vitesse de déplacement de la bande (3) afin de permettre le chauffage des dites zones de déchirage (2) de façon complètement indépendante de la dimension des zones de déchirage dans la direction du dit chemin (A);
le procédé étant **caractérisé en ce qu'**il comprend l'étape d'identification de la zone de déchirage (2) à chauffer, à une station de détection (30) située en amont du dit élément chauffant (15) le long du dit chemin (A) ; la dite étape d'activation du dit élément chauffant (15) étant effectuée après la dite étape d'identification et avec un retard prédéterminé (R) en fonction de la vitesse de déplacement de la dite bande (3) et de la distance, le long du dit chemin (A), entre la dite station de détection (30) et le dit élément chauffant (15), de sorte que, à chaque activation de l'élément chauffant (15), la dite bande (3) est chauffée localement à l'endroit de la dite zone de déchirage identifiée (2).

2. Procédé selon la revendication 1, **caractérisé en ce que** la dite bande (3) comprend un certain nombre de codes de référence (C), associés chacun à au moins une dite zone de déchirage respective (2) ; et **en ce que** la dite étape d'identification comprend l'étape de détection du passage d'un dit code de référence de la dite bande (3) devant la dite station de détection (30).

3. Procédé selon la revendication 2, **caractérisé en ce qu'**il comprend l'étape de réglage de la grandeur du dit retard (R) entre la dite étape de détection des dits codes de référence (C) et la dite étape d'activation du dit élément chauffant (15), en fonction de la vitesse de déplacement de la dite bande (3) et de la distance, le long du dit chemin (A), entre la dite station de détection (30) et le dit élément chauffant (15).

4. Procédé selon une quelconque des revendications précédentes, **caractérisé en ce qu'**il comprend l'étape de réglage de la durée (T) des dits intervalles de temps pendant lesquels le dit élément chauffant (15) est activé, en fonction de la vitesse de déplacement de la dite bande (3) et de la géométrie des dites zones de déchirage (2) à chauffer.

5. Procédé selon une quelconque des revendications précédentes, **caractérisé en ce que** les dites zones de déchirage (2) de la dite bande (3) comprennent au moins une couche (9) de matière électriquement conductrice ; et **en ce que** la dite étape d'activation du dit élément chauffant (15) est effectuée par induction d'un courant électrique dans la dite couche (9) de matière électriquement conductrice de la dite zone de déchirage (2) qui se trouve à l'endroit de l'élément chauffant (15).

6. Dispositif (1) pour le chauffage de zones de déchirage (2) d'une bande (3) de matériau d'emballage pour la production d'emballages scellés de produits alimentaires fluides, qui avance le long d'un chemin donné (A) ; les dites zones de déchirage (2) de la dite bande (3) étant finalement au moins partiellement détachées des parties adjacentes du matériau d'emballage de manière à définir des orifices de versage respectifs des dits emballages ; le dit dispositif (1) comprenant au moins un élément chauffant (15) placé le long du dit chemin (A) et activé sélectivement pour chauffer successivement les dites zones de déchirage (2), et des moyens d'activation (16) pour activer le dit élément chauffant (15), lorsque la dite bande (3) avance, pendant des intervalles de temps successifs, chacun d'une durée (T) déterminable en fonction de la vitesse de déplacement de la bande (3), de façon à permettre de chauffer complètement les dites zones de déchirage (2) indépendamment de la dimension des zones de déchirage (2) dans la direction du dit chemin (A) ;
**caractérisé en ce qu'**il comprend des moyens d'identification (30) placés en amont du dit élément chauffant (15) le long du dit chemin (A) pour identifier successivement les dites zones de déchirage (2) à chauffer ; les dits moyens d'activation (16) comprenant des moyens de commande (23, 31) pour activer le dit élément chauffant (15), à la suite de l'identification des dites zones de déchirage (2) à chauffer, avec un retard prédéterminé (R) lié à la vitesse de déplacement de la dite bande (3) et à la distance, le long du dit chemin (A), entre les dits moyens d'identification (30) et le dit élément chauffant (15).

7. Dispositif selon la revendication 6, **caractérisé en ce que** la dite bande (3) comprend un certain nombre de codes de référence (C), associés chacun à au moins une dite zone de déchirage respective (2) ; et **en ce que** les dits moyens d'identification comprennent des moyens de détection (30) qui engendrent un signal de présence (S1) qui indique le passage d'un dit code de référence (C) de la dite bande (3) devant les moyens de détection (30).

8. Dispositif selon la revendication 7, **caractérisé en ce que** les dits moyens de commande (23, 31) comprennent des moyens de réglage (31) recevant le dit signal de présence (S1) et engendrant un signal de commande (S2) pour activer le dit élément chauffant (15).

9. Dispositif selon la revendication 8, **caractérisé en ce que** le dit signal de présence et le dit signal de commande (S1, S2) sont des signaux d'impulsions ; et **en ce que** les impulsions du dit signal de commande (S2) sont engendrées avec le dit retard (R) par rapport aux impulsions correspondantes du dit signal de présence (S1).

10. Dispositif selon la revendication 9, **caractérisé en ce que** les impulsions du dit signal de commande (S2) ont une longueur liée à la durée désirée (T) des dits intervalles de temps pendant lesquels le dit élément chauffant est activé.

11. Dispositif selon une quelconque des revendications 6 à 10, **caractérisé en ce que** les dites zones de déchirage (2) de la dite bande (3) comprennent au moins une couche (9) de matière électriquement conductrice ; et **en ce que** le dit élément chauffant (15) comprend une inductance (19) en face de la dite bande (3) pour induire un courant dans la dite couche (9) de matière électriquement conductrice de la dite zone de déchirage (2) située à l'endroit de l'élément chauffant (15).

12. Dispositif selon la revendication 11, **caractérisé en ce que** les dits moyens de commande (23, 31) comprennent une source de courant (23) qui reçoit le dit signal de commande (S2) et fournit à la dite inductance (19) un courant lié au signal de commande (S2).

13. Dispositif selon une quelconque des revendications 9 à 12, **caractérisé en ce que** les dits moyens de commande (31) comprennent des premiers moyens de réglage (33) pour régler la longueur des dites impulsions du dit signal de commande (S2) en fonction de la vitesse de déplacement de la dite bande (3) et de la géométrie des dites zones de déchirage (2) à chauffer.

14. Dispositif selon une quelconque des revendications 9 à 13, **caractérisé en ce que** les dits moyens de commande (31) comprennent des deuxièmes moyens de réglage (34) pour régler la grandeur du dit retard (R) entre impulsions correspondantes du dit signal de présence et du dit signal de commande (S1, S2) en fonction de la vitesse de déplacement de la dite bande (3) et de la distance, le long du dit chemin (A), entre les dits moyens de détection (30) et le dit élément chauffant (15).
